Europäisches Patentamt

European Patent Office

Office européen des brevets

(11) Numéro de publication: **0 519 797 B1**

(12) **FASCICULE DE BREVET EUROPEEN**

(45) Date de publication du fascicule du brevet: **02.11.95** (51) Int. Cl.⁶: **C03B 37/04**

(21) Numéro de dépôt: **92401655.3**

(22) Date de dépôt: **16.06.92**

(54) **Procédé et dispositif de formation de fibres.**

(30) Priorité: **20.06.91 FR 9107561**

(43) Date de publication de la demande:
**23.12.92 Bulletin 92/52**

(45) Mention de la délivrance du brevet:
**02.11.95 Bulletin 95/44**

(84) Etats contractants désignés:
**AT BE CH DE DK ES FR GB IT LI NL SE**

(56) Documents cités:
**FR-A- 2 211 408        US-A- 3 215 514**
**US-A- 3 265 483        US-A- 3 785 791**
**US-A- 4 302 234        US-A- 4 303 430**

(73) Titulaire: **ISOVER SAINT-GOBAIN**
**18, avenue d'Alsace**
**F-92400 Courbevoie (FR)**

(72) Inventeur: **Blandin, Yannick**
**12bis, rue Charles de Gaulle,**
**Breuil le Vert**
**F-60600 Clermont (FR)**
Inventeur: **Sainte-Foi, Daniel**
**56, rue Marcel Duchemin**
**F-60600 Clermont (FR)**
Inventeur: **Mosnier, Francis**
**14 Chemin du Crochet**
**F-60580 Coye La Foret (FR)**

(74) Mandataire: **Menes, Catherine et al**
**SAINT-GOBAIN RECHERCHE 39, Ouai Lucien**
**Lefranc**
**F-93300 Aubervilliers (FR)**

## Description

L'invention a trait aux techniques de formation de fibres de verre ou d'autres matériaux thermoplastiques par le procédé de centrifugation interne associée à un étirage par un courant gazeux à haute température. Elle s'applique notamment à la production industrielle de laine de verre destinée à entrer par exemple dans la composition de produits d'isolation thermique et/ou acoustique.

Le procédé de formation de fibres auquel se rapporte l'invention consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur qui les amincit et les transforme en fibres. Par température et vitesse élevées, on entend au sens de l'invention une température au moins supérieure à 500°C et une vitesse du courant annulaire supérieure ou égale à 50 m/s. Les fibres formées sont entraînées par ce courant gazeux d'étirage vers un dispositif de réception très-généralement constitué par une bande perméable aux gaz. Ce procédé a fait l'objet de nombreux perfectionnements dont notamment ceux enseignés dans les brevets US-A-2 991 507, FR-A-2 147 765, FR-A-2 459 783, FR-A-2 443 436, EP-A-91 381 et EP-A-91 866.

Bien que la vitesse du courant gazeux d'étirage soit très grande et systématiquement supérieure à la vitesse de projection des filaments, l'énergie cinétique des fibres est suffisante pour que nombre de celles-ci pénètrent le courant gazeux d'étirage qui entoure le centrifugeur sur une épaisseur de quelques millimètres seulement. Ce courant d'étirage s'épanouit ensuite juste sous le centrifugeur ce qui a pour effet de disperser les fibres sur une large surface. Ces fibres inclinent finalement leur course pour tomber sur le tapis de réception situé quelques mètres plus bas. Le tapis de réception intercepte ainsi des fibres dispersées dans un tore cylindrique, d'un petit diamètre par rapport à la largeur du tapis, ce qui rend difficile une répartition bien uniforme des fibres sur ce tapis.

Par ailleurs, l'équilibre thermique du centrifugeur est le plus souvent assuré par un chauffage par induction à l'aide d'un inducteur annulaire parcouru par un courant électrique. Le maximum d'efficacité est obtenu lorsque cet inducteur annulaire est très près du centrifugeur. Comme les centrifugeurs utilisés sont de préférence des centrifugeurs sans fond, le montage de cet inducteur ne peut être effectué qu'en le disposant juste à l'extérieur du centrifugeur, de façon concentrique. Il ne reste donc disponible pour le passage des fibres qu'un espace relativement étroit mais qui doit être impérativement respecté pour éviter que l'inducteur ne constitue un obstacle à l'évidence nuisible à la qualité du produit final et qui de toute façon ne pourrait fonctionner bien longtemps car il serait engorgé par les fibres le heurtant et s'y collant.

Pour remédier à ce problème, il est connu de confiner le courant gazeux d'étirage au moyen d'une nappe gazeuse froide enveloppante le canalisant de manière adéquate. Cette nappe gazeuse est produite par une couronne de soufflage entourant le brûleur annulaire. Froide, elle permet de plus d'aider au refroidissement des fibres dont la résistance mécanique est ainsi améliorée par un effet de trempe thermique.

Cette nappe gazeuse est générée par exemple par une couronne de soufflage semblable à celle décrite dans le brevet US-A-2 991 507, c'est-à-dire constituée par un tube annulaire muni d'une fente circonférentielle ou d'une série d'orifices rapprochés, la divergence des jets assurant la continuité de la barrière fluidique formée au plus tard à la hauteur de la première rangée d'orifices du centrifugeur, ces rangées étant systématiquement comptées par les hommes de cet art de haut en bas. On génère ainsi une barrière étanche intraversable par les fibres qui sont ainsi canalisées.

Néanmoins, ce confinement de la nappe de fibres ne résoud pas les problèmes de répartition des fibres et notamment ceux dus à la formation de mèches par entremêlement des fibres. Avant de revenir sur le mécanisme de formation des mèches, il faut souligner que celles-ci sont à la source de nombreux défauts observés sur les produits finals.

En premier lieu, ces mèches conduisent à une répartition des fibres localement hétérogène, d'autant plus gênante que la longueur des mèches est grande de sorte que la mèche va avoir tendance à s'enrouler sur elle-même et en se déposant en tas, à laisser des zones déficitaires en fibres. Dans ces zones, la masse surfacique du produit est plus petite ce qui modifie localement certaines des propriétés du produit. Pour garantir un niveau minimum de performances, il faut donc compenser ces zones localement déficitaires par un excédent de fibres qui renchérit le coût du produit.

D'autre part, l'orientation des fibres dans les mèches est différente de l'orientation générale des fibres isolées qui peut elle-même différer de l'orientation souhaitée dans le produit final. Les mèches vont donc compliquer la maîtrise de cette orientation finale qui influe notamment sur les propriétés isolantes, la propension au délaminage et la résistance à l'écrasement.

Par ailleurs, ces mèches se forment souvent très haut dans la hotte de fibrage et de réception des fibres, avant que les fibres ne soient encollées par une pulvérisation de liant. Si les fibres ne sont pas bien Isolées lors de l'encollage, la répartition du liant n'est pas totalement homogène et les fibres non encollées se repèrent dans le produit final par des taches blanches contrastant avec les fibres colorées par le liant. L'aspect du produit en est quelque peu affecté mais surtout certaines de ces propriétés mécaniques comme par exemple la résistance à la traction, la résistance à l'arrachement des fibres, la rigidité, le regonflement et l'aptitude à la découpe.

Tous ces paramètres jouent de façon plus ou moins importantes selon le type de produits classés généralement en produits légers - dont la densité est généralement inférieure à 25 ou même 15 kg/m$^3$ - généralement disponibles sous forme de rouleaux ou en produits lourds - dont la densité est typiquement supérieure à 30 kg/m$^3$ et qui sont souvent soumis à des conditions d'utilisation impliquant une bonne résistance mécanique. Il doit être de plus souligné que si les propriétés recherchées pour des produits lourds ou légers sont quelque peu différentes, il est souhaitable de disposer de lignes de fabrication polyvalentes, donc munies de moyens tendant à résoudre les problèmes posés, notamment ceux liés à la formation des mèches, le plus en amont possible et non de moyens palliatifs remédiant seulement à quelques défauts spécifiques des produits lourds ou légers.

Dans cet ordre d'idée, la solution n'est donc pas uniquement dans les dispositifs répartiteurs, mécaniques ou pneumatiques, tels que ceux décrits dans les brevets EP-A 69 321 et EP-A 125 963 et qui visent à provoquer un mouvement de balancier du tore de fibres. En effet de tels dispositifs ne sont efficaces que du point de vue de la répartition finale des masses surfaciques mais non vis-à-vis du mèchage à proprement dit et sont tout particulièrement inopérant pour ce qui concerne le problèmes des mèches longues.

A noter de plus que de tels dispositifs nécessitent souvent des réglages longs et délicats que seul du personnel expérimenté est en mesure de réaliser et qui doivent de plus être répétés à chaque changement de fabrication. Il faut d'ailleurs souligner que la difficulté de ces réglages tient à la quasi impossibilité à isoler les facteurs Intervenants dans l'ensemble des mécanismes, la couronne de soufflage jouant notamment un certain rôle dans le processus de formation des fibres et des mèches en complément mais de manière indissociable de son rôle de confinement de la nappe de fibres.

Dans le procédé de fibrage faisant l'objet de l'invention, diverses considérations évoquées de façon détaillée dans le brevet EP-B-91 866 permettent de supposer que même si l'étirage est à l'évidence un phénomène complexe où Interviennent les mouvements du centrifugeur et du courant gazeux chaud d'étirage, l'hypothèse réductrice la plus probable est qu'il procède par un effet essentiellement mécanique, le filament étant d'une part "accroché" au centrifugeur et d'autre part tiré par les frottements exercés par le courant gazeux. La température élevée de celui-ci permet d'autre part de maintenir le filament dans un état de fluidité convenant pour son étirage. Mais cette hypothèse mécanique a bien sûr une limite car les filaments amincis sont fragilisés par leurs chocs avec le courant gazeux et entre eux - la densité de perçage du centrifugeur étant typiquement de l'ordre de 15 à 50 orifices par centimètre carré, il est sûr que les chocs sont nombreux. Par ailleurs, la barrière fluidique générée par la couronne de soufflage va en refroidissant brutalement les fibres ralentir l'étirage. Mais de plus, il semble que des fibres rebondissent sur elle et soient renvoyées vers les filaments en cours d'étirage ce qui va favoriser l'entremêlement des fibres.

Pour mieux comprendre quels peuvent être les rôles joués par la couronne de soufflage, il peut être intéressant de se référer à d'autres procédés de fibrage présentant de nombreuses analogies avec le procédé ici évoqué mais plus simples à interpréter car ne possédant pas de brûleur d'étirage de sorte que la couronne agit sur des filaments et non sur des fibres ou un mélange de fibres et de filaments.

Le premier de ces procédés est évoqué dans les brevets US-A-4 302 234 et US-A-4 303 430 et consiste en un procédé de fibrage par centrifugation interne et étirage gazeux à froid. Dans ce cas, les filaments projetés par le centrifugeur sont éventuellement maintenus en température par un brûleur à lèvres larges qui génère un courant gazeux chaud mais à vitesse peu élevée. Ce courant gazeux maintient les filaments centrifugés dans un état plastique sans pour autant participer directement à leur étirage. Cet étirage est par contre réalisé aux moyens de jets gazeux turbulents distincts émis par une couronne de soufflage dont les organes de production des jets sont disposés selon un pas d'environ 50 mm.

Le second procédé qui peut être évoqué est décrit dans le brevet US-A-4 058 386 et se présente comme un procédé de fibrage par centrifugation pure. Dans ce cas, les filaments sont préparés à partir d'un centrifugeur percé d'orifices de 3 à 10 fois plus petits que dans les procédés de fibrage évoqués précédemment, de sorte que la force centrifuge suffit à l'obtention directe du diamètre final, sans nécessité d'un étirage complémentaire. Par contre, ces filaments doivent être redirigés vers l'organe de réception et coupés. Cette opération est réalisée par une couronne de soufflage comportant des buses espacées circonférentiellement : les filaments passent au travers des zones calmes entre deux jets puis, du fait de la rotation du centrifugeur se trouvent frappés par un jet et rompus.

Dans le premier cas, avec des filaments relativement grossiers, la couronne de soufflage a ainsi essentiellement une action d'étirage par frottements, ceux-ci étant renforcés par le caractère turbulent des jets. Dans le second cas au contraire, avec des filaments déjà amincis, la couronne de soufflage a essentiellement pour effet de tronçonner ces filaments. Il est donc clair que le rôle de la couronne de soufflage est fonction du processus de fibrage et d'étirage des fibres.

Les auteurs de la présente invention se sont proposés d'étudier une couronne de soufflage à jets discontinus pour le procédé de fibrage par centrifugation et étirage gazeux à chaud afin de constater si l'un ou l'autre des avantages attribués aux couronnes de l'art appliquées à d'autres procédés de fibrage était vérifié.

Il faut tout d'abord noter qu'une telle étude ne pouvait, a priori, n'être que purement théorique et sans application industrielle. En effet, dans les deux procédés précités, la couronne de soufflage agit sur des filaments encore tenus au centrifugeur par une extrémité, qui peuvent donc être assimilés à des fils de longueur infinie. L'action des jets de la couronne de soufflage est donc directement dépendante de la rotation du centrifugeur. Dans le procédé de fibrage par centrifugation interne et étirage gazeux chaud, la couronne de soufflage agit au contraire sur des fibres pour la plupart non liées au centrifugeur. Il suffit d'ailleurs d'arrêter la couronne de soufflage quelques instants pour constater que le courant gazeux d'étirage suffit à former des fibres et à les entraîner vers l'organe de réception, même si bien sûr on est alors rapidement confronté à des problèmes de répartition et de passage au travers de l'inducteur annulaire. Dans ces conditions, on pourrait s'attendre à ce qu'une couronne de soufflage à jets, non étanche à la hauteur du centrifugeur, va "laisser passer" un grand nombre de fibres et être totalement inefficace dans son rôle de canalisation de la nappe de fibres.

Les auteurs de la présente invention ont néanmoins eu la surprise de constater que de très bons résultats sont obtenus si on procède avec une couronne de soufflage dont les jets sont individualisés sur toute la hauteur percée de la bande périphérique du centrifugeur et fusionnent à une hauteur voisine, mais inférieure, à la hauteur de la dernière rangée d'orifices de la bande périphérique.

De façon générale, l'invention propose un procédé de formation de fibres de verre ou d'autre matériau thermoplastique dérivé du procédé connu du brevet FR-A-2 443 436 ou encore du brevet EP-B-91 866, autrement dit un procédé de fibrage par centrifugation interne et étirage gazeux à haute température suivant lequel le matériau à fibrer, à l'état étirable, est déversé à l'intérieur d'un centrifugeur, tournant autour d'un axe essentiellement vertical, dont la bande périphérique est percée d'un très grand nombre d'orifices d'où le matériau est projeté sous la forme de filaments immédiatement étirés en fibres et entraînés vers un organe de réception par un courant gazeux à température et vitesse élevées, c'est-à-dire à une température au moins supérieure à 500°C et à une vitesse de courant annulaire d'au moins 50 m/s. Ledit courant est dirigé le long de la périphérie du centrifugeur, transversalement au sens de projection des fibres, ce courant gazeux d'étirage et d'entraînement des fibres étant canalisé par une nappe gazeuse froide enveloppante formée sur toute la hauteur percée de la bande périphérique de jets individualisés divergents, lesdits jets se rejoignent peu après la dernière rangée d'orifices de la bande périphérique, ces rangées étant comptées de haut en bas.

Dans ces conditions, il apparait que la nappe gazeuse froide canalise suffisamment le courant gazeux d'étirage pour éviter que la nappe de fibres ne s'expanse trop juste sous le centrifugeur et que de ce point de vue, le fonctionnement est apparemment très voisin de celui obtenu avec une nappe continue étanche. Pour autant, ce fonctionnement surprenant n'est vérifié que si la nappe gazeuse n'est discontinue qu'à la hauteur de la bande percée du centrifugeur et devient continue peu après la dernière rangée d'orifices, par exemple au niveau du bas de la bande périphérique.

Deux jets sont considérés comme joints à partir du lieu ou leurs surfaces frontières sont tangentes, ces surfaces frontières étant définies conformément aux théories de mécaniques de fluides comme les surfaces limitant tout l'espace occupé par le gaz en mouvement ou autrement dit par le lieu de tous les points où la composante de vitesse selon l'axe d'écoulement du jet est nulle ou du moins négligeable par rapport à la vitesse du milieu où s'écoule le jet, les jets étant ici considérés dans leur région principale, à un moment où ils peuvent donc être considérés comme provenant d'une source ponctuelle infiniment petite.

De bons résultats sont obtenus en pratique lorsque les jets se rejoignent aux environs de 20 mm en dessous de la dernière rangée d'orifices, ce qui correspond à peu près au niveau de l'inducteur électromagnétique lorsque celui-ci est utilisé. En tout cas, pour assurer le bon fonctionnement de ce dernier, le niveau de jonction des jets ne sera de préférence pas inférieur au niveau bas de l'inducteur.

Les jets individualisés selon l'invention sont émis de préférence selon une vitesse grande, de préférence pas inférieure à 250 m/s à la hauteur de l'organe générateur des jets. Entre deux jets, la vitesse des gaz est normalement sensiblement nulle mais des valeurs de vitesses négatives sont également

4

permises qui correspondent à la présence de courants de retour.

Un effet absolument remarquable de la couronne de soufflage à jets individualisés selon l'invention est qu'elle conduit à un moindre mèchage au niveau du centrifugeur ce qui s'observe de visu et surtout se vérifie aux performances mesurées des produits finals. Plusieurs hypothèses peuvent être avancées pour expliquer ce phénomène, encore qu'il est probable que ces explications ne prennent pas en compte la totalité des phénomènes produits et que l'interdépendance des multiples paramètres influant sur le produit final complique toute interprétation.

La première hypothèse serait celle d'un raccourcissement des fibres. En effet, dans le processus de fibrage ici évoqué, les filaments sont amincis par le courant gazeux annulaire d'étirage et normalement cassés. Néanmoins, il peut se produire que des filaments exceptionnellement longs soient formés avant d'être cassés et ces fibres longues d'une dizaine de centimètres ou plus par exemple - auront tout naturellement une tendance à s'enrouler en mèches qui en se formant vont capter d'autres fibres isolées. Avec une couronne de soufflage selon l'invention, il est probable qu'un mécanisme voisin de celui décrit dans US-A-4 058 386 va pouvoir se produire et que ces quelques filaments longs vont pénétrer au travers de la nappe gazeuse froide dans les zones d'entre-jets avant d'être brutalement rompus par un jet. En revanche, les fibres déjà formées seraient d'une manière prépondérante entraînées par le courant d'étirage gazeux ce qui expliquerait le caractère "étanche" de la nappe discontinue. Par ailleurs cet effet permet de se placer éventuellement dans des conditions d'étirage relativement moins violentes en choisissant une température des gaz d'étirage et une pression du brûleur d'étirage uniquement en fonction de l'objectif de finesse des fibres, indépendamment de leurs longueurs essentiellement contrôlées par la couronne de soufflage.

La seconde hypothèse liée à la première est que cette casse ne se produirait pas sans être précédée par un complément d'étirage dû à la traction exercée par ces filaments lors de l'accélération de sorte que les fibres d'une finesse donnée pourraient être obtenues avec une pression du brûleur d'étirage relativement moindre. Ainsi, on limiterait les phénomènes turbulents engendrés par le brûleur d'étirage et par voie de conséquence le méchage.

La présente invention a également pour objet un dispositif de formation de fibres de verre ou d'autres matériaux thermoplastiques comportant un centrifugeur, tournant autour d'un axe essentiellement vertical, dont la bande périphérique est percée d'un très grand nombre d'orifices, un brûleur annulaire d'étirage et une couronne de soufflage comportant des éléments générateurs de jets individualisés divergents distants de d = 2h x tg $\alpha$ où $\alpha$ représente l'angle de divergence des jets, ou plus précisément l'angle entre l'axe central de symétrie du jet et la courbe asymptotique à sa frontière et h une distance comprise entre 1 fois et au plus 2 fois, et de préférence au plus 1,5 fois la hauteur mesurée entre le bas desdits éléments générateurs des jets et la dernière rangée d'orifices de la bande périphérique. De préférence encore, h excède cette hauteur mesurée d'environ 20 mm.

Une fois l'espacement des jets déterminé, la couronne de soufflage selon l'invention peut être réalisée de différentes façons. Dans une première variante dont la simplicité constitue le principal avantage, la couronne de soufflage est constituée par un simple anneau tubulaire percé d'orifices dont le diamètre est par exemple compris entre 2 et 3 mm. Dans cette variante la couronne de soufflage selon l'invention ne diffère donc pas de la couronne connue de US-A-2 991 507 que par l'espacement entre les orifices et le diamètre de ceux-ci majoré de 50 à 100 %.

Dans une seconde variante, la couronne de soufflage peut être constituée par une série de buses alimentées par une nourrice à distance du centrifugeur en vue de favoriser les phénomènes d'induction d'air extérieur par la couronne de soufflage.

Dans une variante tout particulièrement préférée de l'invention, la couronne de soufflage est constituée par un anneau tubulaire dont les orifices sont munis de tétons fixés par exemple par soudure et réalisés dans un matériau non ferro-magnétique pour éviter toute interférence avec l'induction électro-magnétique. En permettant un guidage prolongé des jets, les tétons conduisent à une plus grande stabilité des conditions d'émission des jets individualisés et de ce fait la régularité de fonctionnement de la couronne en est favorablement affectée.

D'autres détails et caractéristiques avantageuses ressortent de la description faite ci-après en référence aux dessins annexés qui représentent :

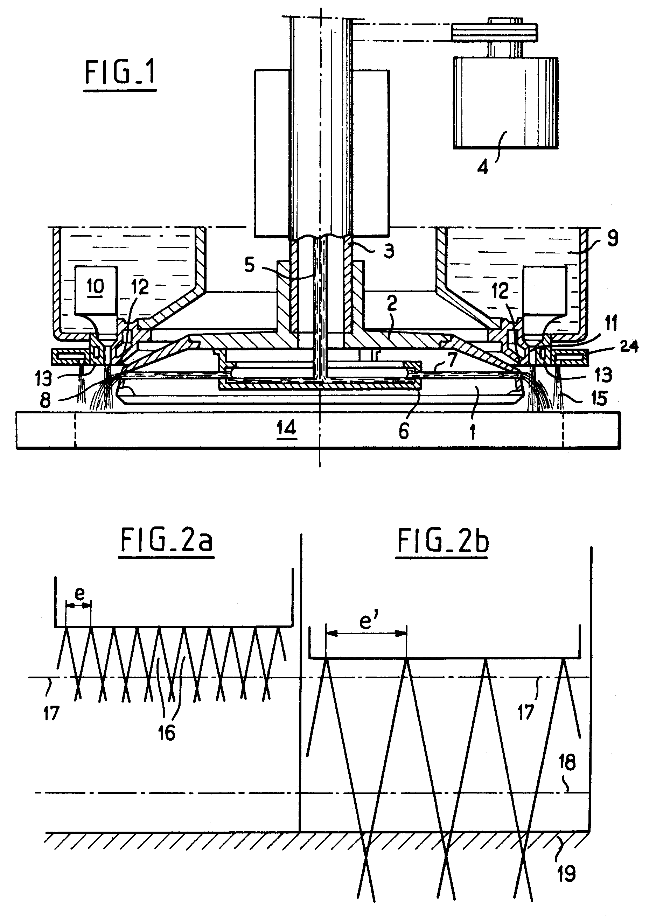

. **figure 1** : une vue schématique en coupe de l'ensemble des principaux éléments intervenant dans un dispositif de fibrage par centrifugation interne et étirage par un courant gazeux à température et vitesse élevées,

. **figure 2** : deux schémas illustrant le principe d'une couronne de soufflage selon US-A-2 991 507 (figure 2-A) et selon l'invention (figure 2-B),

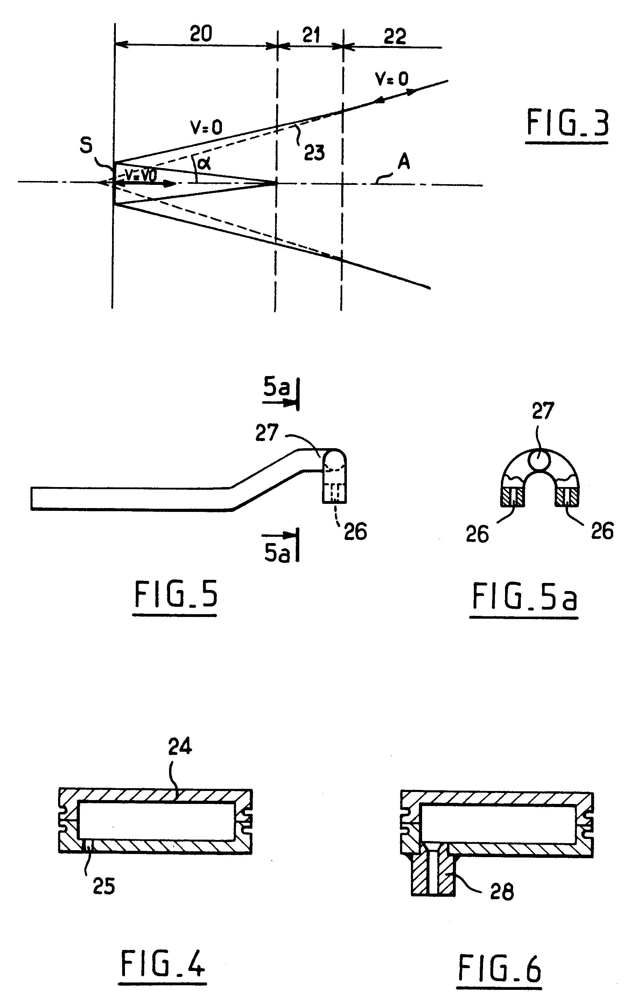

. **figure 3** : un diagramme d'un jet gazeux,

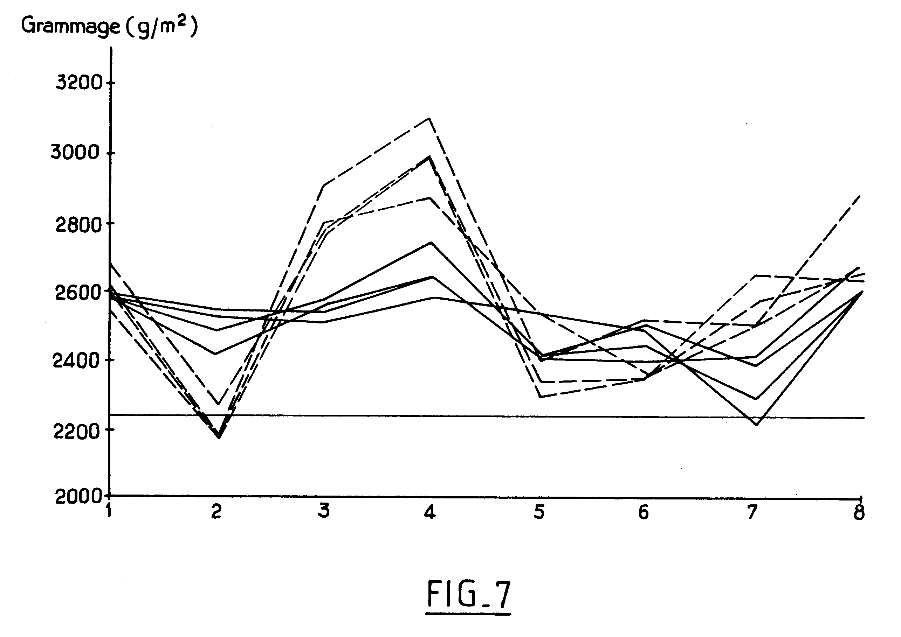

.  **figure 4** : une vue en coupe d'une couronne du type tube annulaire percé,
.  **figure 5** : une vue en coupe d'une couronne à buses, ainsi qu'une coupe verticale (figure 5a),
.  **figure 6** : une vue en coupe d'une couronne à tétons,
.  **figure 7** : une coupe illustrant la répartition transversale du produit,

La figure 1 représente très schématiquement une installation de fibrage propre à la mise en oeuvre de l'invention et, à l'exception évidemment de la couronne de soufflage, conforme par exemple à l'enseignement du brevet EP-A-91 866. Cette installation est essentiellement constituée par un centrifugeur sans fond 1 dont la bande périphérique est percée d'un grand nombre d'orifices, fixés à un moyeu 2 en prise sur l'arbre de rotation monté vertical 3, entraîné par un moteur 4. Le filet de verre fondu 5 alimente le centrifugeur en passant par l'arbre creux 3 et s'écoule dans un panier 6 à fond plein pourvu d'une paroi cylindrique percée d'un petit nombre d'orifices relativement gros, par exemple d'un diamètre de l'ordre de 3 mm grâce auxquels le verre fondu est distribué sous forme de filets primaires 7 dirigés vers l'intérieur de la bande périphérique d'où il est expulsé sous l'effet de la force centrifuge sous forme de filaments 8.

Le centrifugeur est entouré d'un brûleur annulaire 9, ici avec un carter métallique refroidi à l'eau délimitant une chambre de combustion 10 qui communique avec une tuyère 11 formant le courant d'étirage. La tuyère 11 est formée par les lèvres interne et externe 12 et 13 également refroidies et qui débouchent juste au-dessus de la paroi périphérique du centrifugeur.

Juste sous le centrifugeur et concentriquement à celui-ci, on trouve un inducteur annulaire 14 qui aide au maintien de l'équilibre thermique du brûleur notamment afin de compenser la relative froidure du bas de la bande périphérique moins chauffé par les gaz d'étirage car plus éloigné des lèvres 12 et 13 du brûleur annulaire. D'autres détails sur cet inducteur annulaire figurent notamment dans le brevet US-A-3 077 092.

La couronne de soufflage 15 concentrique du brûleur annulaire émet un courant d'air froid à température sensiblement voisine de l'ambiante. La figure 2a illustre la géométrie des jets dans une couronne de soufflage selon l'art, par exemple selon US-A-2 991 507 : les jets 16 sont ainsi émis par des orifices très rapprochés - par exemple avec un entraxe e de 7,4 mm pour des orifices de 1,5 mm de diamètre et à une distance suffisamment grande de la première rangée d'orifices, ici schématisée par une ligne discontinue 17 pour que les jets se soient mélangés à sa hauteur et forment dès lors une nappe continue. Dans le cas de l'invention au contraire représenté à la figure 2b, on cherche à préserver au maximum l'individualisation des jets à la hauteur de la bande percée du centrifugeur, c'est pourquoi les orifices de la couronne peuvent être quelque peu abaissés et les jets émis très près de la première rangée - disposition qui conduit à des jets plus énergétiques, la vitesse maximale étant obtenue à l'émission. Par ailleurs, les orifices sont nettement plus éloignés (par exemple disposés avec un entraxe e′ de 25 mm pour un diamètre de perçage de 2,5 mm) de sorte que les jets ne se rejoignent qu'après avoir parcouru une distance voisine de 60 mm, et sont donc encore individualisés à la hauteur de la dernière rangée d'orifices de la bande percée du centrifugeur, ici schématisée par la ligne 18. Par contre, cette individualisation disparait au voisinage de l'inducteur 19 et dès lors la nappe est continue.

Dans les figures 2a et 2b, les jets sont schématisés comme provenant d'une source ponctuelle infiniment petite alors qu'en réalité, ils sont générés par une source ayant une section de quelques millimètres carrés. Néanmoins, dans la mesure où le point crucial de l'invention concerne la zone de jonction de deux jets et que celle-ci se situe loin de la zone d'émission, cette approximation n'est pas génante comme on peut le voir grâce à la figure 3 où est présenté le diagramme d'un jet obtenu à partir d'une source S produisant un jet admettant une symétrie axiale autour de l'axe A. Comme l'enseigne la mécanique des fluides, ce jet comporte 3 régions : une région initiale 20 en forme de cône, une région intermédiaire 21 et une région 22 principale délimitée par la frontière du jet, c'est-à-dire par le lieu des points à vitesse nulle. Dans la zone principale, cette frontière est limitée par une courbe asymptotique 23 de sorte que le jet peut être considéré dans cette zone comme identique à un cône d'axe A, et d'angle $\alpha$, ayant son sommet en un point de l'axe A assimilé à un point de la source S. Au sens de l'invention, $\alpha$ est défini comme l'angle de divergence du jet, et la vitesse maximale du jet considéré est la vitesse mesurée sur l'axe A à la hauteur de la source S, et deux jets voisins sont considérés comme joints lorsque leurs frontières respectives s'entrecroisent.

La couronne selon l'invention a été testée selon différentes variantes de réalisation schématisées aux figures 4 à 6. La figure 4 correspond à une couronne du type tube annulaire percé, constituée par un simple tore à section rectangulaire 24 dont la paroi inférieure est percée par une série d'orifices 25 distincts. Les couronnes C1 et C2 correspondent à ce premier type. Les figures 5 et 5a montrent une couronne à buses ou plus précisément à doubles buses comme on peut le voir sur la coupe 4a. Chaque jet est ainsi produit par une buse 26 alimentée par un tube 27. A la différence du cas précédent, l'alimentation de chaque groupe de deux buses est donc individualisée. Les couronnes C4 et C5 correspondent à ce type.

6

Enfin, la figure 6 montre une variante dérivée de la figure 4 où un téton 28 vient se loger en regard de chaque orifice ou trou. La couronne C3 a été réalisée selon ce modèle. Les caractéristiques des couronnes testées sont les suivantes :

TABLEAU I

| Type | Nombre de trous | Entraxe (mm) | Perçage (mm) | Couronne (mm) |
|------|-----------------|--------------|--------------|---------------|
| C1 | 290 | 7,43 | 1,5 | 686 |
| C2 | 86 | 25 | 2,5 | 686 |
| C3 | 86 | 25 | 2,5 | 686 |
| C4 | 86 | 25 | 2,5 | 686 |
| C5 | 43 | 50,1 | 3 | 686 |

La couronne C1 est une couronne standard conforme à l'enseignement du brevet US-A-2 991 507. La couronne C2 diffère de cette couronne C1 uniquement par l'espacement plus grand entre les trous, compensés pour partie par une augmentation du diamètre des orifices. La couronne C3 est basée sur le couronne C2 si ce n'est que les orifices sont remplacés par des tétons en acier inoxydables, ou tout autre matériau non ferro-magnétique, soudés à l'anneau qui avantageusement guident le jet sur une hauteur de l'ordre de 10 mm au moins, alors que dans le cas d'un tube annulaire percé, ce guidage peut s'effectuer au plus sur une hauteur correspondant à l'épaisseur de la paroi du tube. De plus, avec des tétons, il est très facile de donner une légère inclinaison aux jets, de façon à leur donner une orientation non parallèle à l'axe du centrifugeur. Enfin les couronnes C4 et C5 sont des couronnes constituées par une série de buses équidistantes.

Pour la suite, et sauf indications particulières contraires, tous les essais ont été effectués avec un centrifugeur de 600 mm de diamètre, avec une distribution du perçage basée sur les enseignements du brevet FR-A-1 182 917 et des conditions de marche décrites dans le brevet EP-A-91 866, notamment pour ce qui concerne les compositions de verre utilisées. Le brûleur annulaire engendre un jet gazeux dont la température aux lèvres du brûleur est de l'ordre de 1430°C - 1450°C. La finesse des fibres est déterminée par la valeur de leur micronaire (F) sous 5 g. La mesure du micronaire appelée aussi "indice de finesse" rend compte de la surface spécifique grâce à la mesure de la perte de chage aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est normalisée (DIN 53941 ou ASTM D 1448) et elle utilise un appareil dit "appareil micronaire". Les essais de l'invention ont été menés avec une machine SHEFFIELD, type FAM 60 P. Cette machine comporte une arrivée d'air (ou d'azote) sous pression, une vanne de réglage de cette pression, un débitmètre, une chambre cylindrique à axe vertical avec arrivée des gaz en partie inférieure. Les fibres pesées, (le plus souvent, 5 grammes 0,01 g) sont pressées au fond de la chambre par un bouchon calibré qui laisse échapper les gaz. Un essai préliminaire permet d'ajuster le débit d'air à une valeur donnée, toujours la même avant de commencer l'essai du tampon de fibres. La mesure du micronaire ou de l'indice de finesse, consiste à relever l'indication du débitmètre normalisé, lorsque la fibre est en place. Pour travailler dans la même gamme de pertes de charge, il est nécessaire d'adapter la quantité de fibres testées en diminuant la masse lorsque le diamètre diminue. Il est donc nécessaire de mentionner celle-ci en même temps que le résultat du débit. A noter que plus les fibres sont fines, plus leur capacité à s'opposer au passage du courant gazeux - et corrélativement leur pouvoir isolant - est plus grande donc plus le micronaire sera petit.

Dans un premier temps, ces essais ont été réalisés dans le cas de la production de produits lourds, pour lesquels les exigences de tenue mécanique sont au moins aussi importantes que celles concernant la capacité isolante. Les essais ont alors été effectués avec une pression dynamique au niveau du brûleur de 32500 Pa, pour une vitesse de centrifugeur de 1450 tours/minute, conduisant à des fibres d'un micronaire de 4 sous 5 g. La densité des produits est de 84 kg/m$^3$, leur teneur en liant de 6,8%.

TABLEAU II

| Type couronne | débit air (m³/h) | flèche (mm) | arrachement (N/dm²) |
|---|---|---|---|
| C1 | 932 | 105 | 28 |
| C1 | 630 | 101 | 55 |
| C2 | 823 | 107 | 40 |
| C2 | 560 | 115 | 42 |
| C3 | 750 | 105 | 67 |
| C3 | 550 | 85 | 56 |
| C4 | 750 | 105 | 55 |
| C4 | 540 | 102 | 62 |
| C5 | 520 | 120 | 50 |
| C5 | 653 | 106 | 25 |

TABLEAU II (suite)

| Type couronne | compression (RPa) 25 % | aptitude découpe | Lambda à 24°C | répartition (%) |
|---|---|---|---|---|
| C1 | 32 | mauvaise | 32,5 | 75 |
| C1 | 29 | bonne | 32,5 | 84 |
| C2 | 32 | bonne | 32,8 | 88 |
| C2 | 33 | bonne | 32,7 | 97 |
| C3 | 36 | bonne | 32,8 | 84 |
| C3 | 37 | bonne | 32,5 | 97 |
| C4 | 30 | bonne | 32,8 | 88 |
| C4 | 29 | mauvaise | 32,7 | 97 |
| C5 | 50 | moyenne | 32,9 | 65 |
| C5 | 41 | moyenne | 32,8 | 59 |

Dans ces mesures, la flèche indique l'affaissement d'un panneau de 1,20 m reposant simplement sur ces extrémités longitudinales, plus la valeur est petite et plus le produit se conduira comme une plaque rigide ce qui simplifie sa pose. Par arrachement (en Newton par dm²) on tend la force qui doit être exercée pour arracher un lambeau de 1 dm² de produits. La valeur de la compression (en kilo Pascals), correspond à la pression qui doit être exercée pour réduire l'épaisseur du produit d'un quart. La conductivité thermique Lambda, mesurée à 24°C est donnée en Watts par mètre et par degré centigrade (W /m°C). Enfin, la répartition exprime le pourcentage des mesures pour lesquelles la masse surfacique mesurée a été égale à 10 % à la masse surfacique moyenne (ici 2270 g/m², compte tenu d'une épaisseur de 27 mm), chaque mesure étant effectuée sur une bande longitudinale de produit, huit bandes étant nécessaires pour reconstituer le produit dans sa largeur initiale.

La figure 7 permet de visualiser de façon plus claire ce gain au niveau de la répartition. Là encore, le produit a été découpé en huit bandes longidutinales et la masse surfacique de chacune mesurée. Les courbes en pointillés correspondent à des produits obtenus avec une couronne du type C1, les courbes en traits continus sont obtenues avec des couronnes du type C3. Les irrégularités d'une bande à l'autre sont bien moins prononcées avec la couronne selon l'invention.

Il ressort du tableau précédent que dans tous les cas, les couronnes selon l'invention (C2 à C4) conduisent à des valeurs au moins égales aux valeurs obtenues avec une couronne standard, des résultats bien plus performants étant obtenus avec une couronne à tétons (C3), notamment pour ce qui est de la résistance à l'arrachement et des valeurs de flèches.

Par contre les résultats obtenus avec la couronne C5 où les jets sont encore individualisés bien après le passage sous le centrifugeur sont mauvais. Un autre aspect important des produits selon l'invention est la réduction très sensible du nombre de taches blanches, montrant par là le caractère plus homogène de l'ensimage. Il semble donc bien qu'en procédant selon l'invention, on obtient un effet de découpe du tore de fibres selon des mèches relativement courtes.

Ces essais ont concerné dans un second temps un produit léger, obtenu avec une pression dynamique au niveau du brûleur de 45500 Pa, pour une vitesse de centrifugeur de 1900 tours/minute. La masse surfacique est de 880 g/m$^2$, la densité de 11 kg/m$^3$, le micronaire F/5g de 3,0 et la teneur en liant phenol-formaldehyde de 4,5 %. Ce type de produit est généralement commercialisé sous forme de rouleaux et est utilisé pour l'isolation de combles ou des parois verticales.

TABLEAU III

| Couronne | Q(m$^3$/h) | R T (gf/g) | RE (T/6) | Lambda | Répartition |
|----------|-----------|-----------|----------|--------|-------------|
| C1 | 480 | 250 | 139 | 45,8 | 94 % |
| C2 | 602 | 265 | 139 | 45,3 | 88 % |
| C2 | 334 | 266 | 138 | 45,1 | 81 % |
| C3 | 557 | 246 | 138 | 45,8 | 94 % |
| C3 | 317 | 260 | 138 | 45,2 | 91 % |
| C4 | | 232 | 140 | 45,8 | 88 % |
| C5 | | 228 | 131 | | |

Dans ce tableau, RT fait référence à la résistance sous traction exprimée ici en grammes-force par gramme, c'est-à-dire à la force nécessaire pour rompre une éprouvette pincée à ses 2 extrémités par 2 machoires : RE correspond à la reprise d'épaisseur (exprimée en pourcentage) d'un produit comprimé d'un facteur 6, la valeur 100 correspond à l'épaisseur nominale du produit, non à son épaisseur effective ce qui explique que des valeurs supérieures à 100 soient ici obtenues. La conductivité thermique et la répartition sont exprimées dans les mêmes unités que dans l'exemple précédent.

Les valeurs ici indiquées semblent faire ressortir une très faible influence de la couronne de soufflage sur la couronne de soufflage. Mais il importe de noter que toutes ces valeurs sont satisfaisantes à l'exception de la couronne dont les jets sont distants à l'original de 50 mm et ne fusionnent donc que bien plus bas que l'inducteur.

D'autre part, les produits selon l'invention présentent une sensible réduction du nombre de taches blanches. Mais même si dans le cas des produits légers, les résultats ne sont pas nettement améliorés, ceci traduit clairement un effet favorable. De plus, de façon très avantageuse, les produits ont été obtenus en ne modifiant que quelques paramètres de marche par rapport à l'exemple précédent, mais avec la ligne de production rigoureusement identique. La polyvalence de la ligne est donc bien sensiblement accrue du fait de l'amélioration constatée pour ces produits lourds.

Il peut enfin être rappelé que les couronnes de soufflage selon l'invention peuvent être également utilisées dans de très bonnes conditions avec des conditions d'étirage gazeux un peu différentes, par exemple avec une température des gaz d'étirage de l'ordre de 800°C, pour une vitesse du courant gazeux d'étirage de l'ordre de 50 m/s, le centrifugeur étant dans ce cas muni d'orifices un peu plus petits que dans les cas précédemment évoqués afin de compenser la diminution relative de l'étirage par le courant gazeux.

**Revendications**

1. Procédé de formation de fibres de verre ou d'autres matériaux thermoplastiques par centrifugation interne associée à un étirage gazeux à haute température selon lequel le matériau à fibrer à l'état étirable (5) est déversé à l'intérieur d'un centrifugeur (1), tournant autour d'un axe (3) essentiellement vertical, dont la bande périphérique est percée d'un très grand nombre d'orifices d'où le matériau est projeté sous la forme de filaments (8) étirés en fibres et entraînés par un courant gazeux à température et vitesse élevées, c'est-à-dire à une température au moins supérieure à 500°C et une vitesse de courant annulaire d'au moins 50 m/s, ledit courant étant dirigé le long de la périphérie du centrifugeur, transversalement au sens de projection des fibres et canalisé par une nappe gazeuse froide (15) l'enveloppant, **caractérisé en ce que** ladite nappe est formée, sur toute la hauteur percée de la bande périphérique de jets individualisés divergents (16) qui se rejoignent peu après la rangée (18) d'orifices la plus basse de la bande périphérique.

**2.** Procédé selon la revendication 1,**caractérisé en ce que** les jets (16) se rejoignent environ 20 mm en dessous de la rangée (18) d'orifices la plus basse.

**3.** Procédé selon la revendication 1 ou 2, **caractérisé par** une vitesse d'émission desdits jets (16) supérieure à 250 m/s.

**4.** Procédé selon l'une des revendications précédentes dans lequel le centrifugeur (1) est chauffé par induction électromagnétique, **caractérisé en ce que** les jets (16) se rejoignent à la hauteur (1a) de l'inducteur annulaire (14).

**5.** Procédé selon l'une des revendications précédentes, **caractérisé en ce** que les jets (16) sont émis avec une composante de vitesse horizontale non nulle.

**6.** Dispositif de formation de fibres de verre ou d'autres matériaux thermoplastiques comportant un centrifugeur (1) tournant autour d'un axe (3) essentiellement vertical dont la bande périphérique est percée d'un très grand nombre d'orifices, un brûleur annulaire (9) d'étirage et une couronne de soufflage concentrique (24), **caractérisé en ce que** ladite couronne de soufflage comporte des éléments (25 ; 28 ; 26) générateurs de jets gazeux individualisés divergents (16) distants de d = 2.h.tg$\alpha$ où $\alpha$ représente l'angle de divergence des jets et h une distance comprise entre 1 fois et au plus 2 fois - et de préférence au plus 1,5 fois la hauteur entre le bas desdits éléments générateurs de jets gazeux et la dernière rangée (18) d'orifices de la bande périphérique.

**7.** Dispositif selon la revendication 6, **caractérisé en ce que** h excède d'environ 20 mm la hauteur entre le bas desdits éléments (25 ; 26 ; 28) générateurs de jets gazeux (16) et la dernière rangée (18) d'orifices de la bande périphérique.

**8.** Dispositif selon la revendication 6 ou 7, **caractérisé en ce que** la couronne de soufflage est constituée par un anneau tubulaire percé (24 ; 25).

**9.** Dispositif selon la revendication 6 ou 7, **caractérisé en ce que** la couronne de soufflage est constituée par un anneau tubulaire sur lequel sont fixés des tétons (28).

**10.** Dispositif selon la revendication 6 ou 7, **caractérisé en ce que** la couronne de soufflage est constituée par une série de buses (26).

**Claims**

**1.** A method for forming fibres from glass or other thermoplastics materials by internal centrifugation associated with gaseous drawing at high temperature whereby the material to be converted into fibres in the drawable state (5) is poured into a centrifuge (1) rotating about a substantially vertical axis (3) and of which the peripheral face is perforated by a very large number of orifices from which the material is projected in the form of filaments (8) drawn out into fibres and entrained by a flow of gas at elevated temperature and speed, that is to say, at a temperature at least greater than 500°C and a speed of annular flow of at least 50 m/s, the said flow being directed along the periphery of the centrifuge, transversely to the direction in which the fibres are projected and channelled by a layer of cold gases (15) enveloping it, characterised in that the said layer is formed over the entire perforated height of the peripheral face by diverging individualised jets (16) which combine shortly after the lowest row (18) of orifices of the peripheral face.

**2.** A method according to Claim 1, characterised in that the jets (16) combine approximately 20 mm below the lowest row (18) of orifices.

**3.** A method according to Claim 1 or 2, characterised by an emission speed of the said jets (16) in excess of 250 m/s.

**4.** A method according to any one of the preceding claims in which the centrifuge (1) is heated by electromagnetic induction, characterised in that the jets (16) combine at the height (1a) of the annular inductor (14).

5. A method according to any one of the preceding claims, characterised in that the jets (16) are emitted with a horizontal speed component other than zero.

6. An apparatus for forming fibres from glass or other thermoplastics materials and comprising a centrifuge (1) rotating about a substantially vertical axis (3) and of which the peripheral face is perforated by a very large number of orifices, an annular drawing burner (9) and a concentric blower ring (24), characterised in that the said blower ring comprises elements (25; 28; 26) for generating diverging individualised gaseous jets (16) spaced apart by d = 2.h.tgα in which α represents the angle of divergence of the jets and h is a distance comprised between once and at most twice and preferably at most one and a half times the height between the bottom of the said gaseous jet generator elements and the last row (18) of orifices in the peripheral face.

7. An apparatus according to Claim 6, characterised in that h exceeds by approximately 20 mm the height between the bottom of the said elements (25; 26; 28) for the generation of gaseous jets (16) and the last row (18) of orifices in the peripheral face.

8. An apparatus according to Claim 6 or 7, characterised in that the blower ring is constituted by a perforated tubular ring (24; 25).

9. An apparatus according to Claim 6 or 7, characterised in that the blower ring is constituted by a tubular ring on which nipples (28) are fixed.

10. An apparatus according to Claim 6 or 7, characterised in that the blower ring is constituted by a series of nozzles (26).

**Patentansprüche**

1. Verfahren zur Bildung von Fasern aus Glas oder weiteren thermoplastischen Materialien durch innere Zentrifugierung in Verbindung mit einem Gasausziehen mit hoher Temperatur, nach dem das zu zerfasernde Material (5) im ausziehfähigen Zustand ins Innere eines um eine im wesentlichen vertikale Achse (3) drehenden Schleuderorgans (1) gegossenen wird, dessen Umfangswandung mit einer sehr großen Zahl von Öffnungen perforiert ist, aus denen das Material in Form von Fäden (8) ausgeschleudert wird, welche in Fasern ausgezogen und durch einen Gasstrom mit hoher Temperatur und Geschwindigkeit mitgerissen werden, d.h. einer Temperatur von mindestens mehr als 500°C und einer Geschwindigkeit des ringförmigen Stromes von mindestens 50 m/s, wobei der Strom in Querrichtung zur Austrittsrichtung der Fasern am Umfang des Schleuderorgans entlanggeleitet und von einem ihn umschließenden kalten Gasschleierring (15) kanalisiert wird, **dadurch gekennzeichnet, daß** der Schleierring über die gesamte Perforationshöhe der Umfangswandung durch divergierende Einzelstrahlen (16) gebildet ist, welche sich kurz nach der untersten Reihe (18) der Öffnungen der Umfangswandung vereinigen.

2. Verfahren nach Anspruch 1, **dadurch gekennzeichnet, daß** sich die Strahlen (16) ungefähr 20 mm unterhalb der untersten Reihe (18) der Öffnungen vereinigen.

3. Verfahren nach Anspruch 1 oder 2, **gekennzeichnet durch** eine Abgabegeschwindigkeit der Strahlen (16) von mehr als 250 m/s.

4. Verfahren nach einem der vorhergehenden Ansprüche, bei dem das Schleuderorgan (1) durch elektromagnetische Induktion beheizt wird, **dadurch gekennzeichnet, daß** sich die Strahlen (16) auf der Höhe (1a) des ringförmigen Induktors (14) vereinigen.

5. Verfahren nach einem der vorhergehenden Ansprüche, **dadurch gekennzeichnet, daß** die Strahlen (16) mit einer horizontalen Geschwindigkeitskomponente abgegeben werden, die nicht Null ist.

6. Vorrichtung zur Bildung von Fasern aus Glas oder weiteren thermoplastischen Materialien, welche ein um eine im wesentlichen vertikale Achse (3) drehendes Schleuderorgan (1), dessen Umfangswandung mit einer sehr großen Zahl von Öffnungen perforiert ist, einen ringförmigen Ausziehbrenner (9) und einen konzentrischen Gebläsekranz (24) aufweist, **dadurch gekennzeichnet, daß** der Gebläsekranz Elemente (25; 28; 26) zur Erzeugung von divergierenden Einzelstrahlen (16) aufweist, die mit d = 2 × h × tanα beabstandet sind, wobei α den Divergenzwinkel der Strahlen darstellt und h eine Distanz, die zwischen der 1-fachen und höchstens der zweifachen - und vorzugsweise höchstens die 1,5-fache - Höhe zwischen der Unterseite der Elemente zum Erzeugen der Gasstrahlen und der letzten Reihe (18) der Öffnungen der Umfangswandung beträgt.

7. Vorrichtung nach Anspruch 6, **dadurch gekennzeichnet, daß** h um ungefähr 20 mm größer als die Höhe zwischen der Unterseite der Elemente (25; 26; 28) zum Erzeugen der Gasstrahlen (16) und der letzten Reihe (18) der Öffnungen der Umfangswandung ist.

8. Vorrichtung nach Anspruch 6 oder 7, **dadurch gekennzeichnet, daß** der Gebläsekranz aus einem perforierten Rohrring (24; 25) besteht.

9. Vorrichtung nach Anspruch 6 oder 7, **dadurch gekennzeichnet, daß** der Gebläsekranz aus einem Rohrring besteht, an dem Ansätze (28) befestigt sind.

10. Vorrichtung nach Anspruch 6 oder 7, **dadurch gekennzeichnet, daß** der Gebläsekranz aus einer Reihe von Düsen (26) besteht.

FIG.1

FIG.2a      FIG.2b

FIG.3

FIG.5

FIG.5a

FIG.4

FIG.6

FIG_7

EP 0 519 797 B1